# FASCICULE DE BREVET EUROPEEN

(11) **EP 2 784 344 B1**
(45) Date de publication et mention de la délivrance du brevet: **25.05.2016**
(21) Numéro de dépôt: 14161879.3
(22) Date de dépôt: 27.03.2014
(51) Int. Cl.: B60G 15/02, F16F 9/512, F16F 9/48, B61G 5/02, B61F 5/24, F16F 9/346

(54) **Amortisseur hydraulique bi-mode**
Hydraulischer Doppelmodusdämpfer
Dual-mode hydraulic damper

(30) Priorité: 27.03.2013 FR 1352772
(43) Date de publication de la demande: 01.10.2014
(73) Titulaire: ALSTOM Transport Technologies, 92300 Levallois-Perret (FR)
(72) Inventeur: Bourdiau, Philippe, 71200 ST SERNIN DU BOIS (FR)
(74) Mandataire: Domenego, Bertrand

(56) Documents cités:
- EP-A1- 0 852 303
- FR-A1- 2 704 613
- US-A- 5 890 434

## Description

L'invention a pour domaine celui des amortisseurs du type comportant un piston ayant une tige et une tête, propre à coulisser dans un cylindre, ledit cylindre comportant une chambre principale subdivisée par la tête en une chambre basse et une chambre haute, et des moyens de décharge connectant hydrauliquement les chambres basse et haute pour une plage de positions de la tête du piston à l'intérieur de la chambre principale.

Le document GB 1 239 667 divulgue un amortisseur du type précité. La paroi latérale de la chambre principale est munie d'une pluralité de trous calibrés disposés le long de l'axe de l'amortisseur et d'un trou de décharge non calibré situé à proximité de la paroi d'extrémité supérieure de la chambre principale. Ces trous permettent la circulation du fluide entre les chambres basse et haute, à travers la chambre de décharge. Pour une position donnée de la tête du piston subdivisant la chambre principale en une chambre basse et une chambre haute, l'effort généré par l'amortisseur dépend du nombre de trous calibrés débouchant dans la chambre basse, sachant que tout le fluide passant par ces trous calibrés passera librement par le trou non calibré de la chambre haute. Ainsi, l'amortisseur présente un effort qui évolue progressivement d'une première valeur à une seconde valeur, lors du déplacement de la tête du piston de la position totalement rétractée à la position totalement étirée de l'amortisseur. Le document FR27 04613 divulgue un amortisseur comprenant une dérivation basse.

Par ailleurs, dans le domaine ferroviaire, il a été envisagé d'utiliser une paire d'amortisseurs hydrauliques soit entre les caisses de deux voitures successives d'un train, soit entre la caisse et le boggie d'une même voiture d'un train.

Cependant, les amortisseurs hydrauliques de l'état de la technique présentent généralement une caractéristique effort/déplacement sensiblement carrée, c'est-à-dire qu'ils sont propres à générer un effort sensiblement constant sur l'ensemble de la course de la tête du piston entre la position totalement rétractée et la position totalement étirée de l'amortisseur.

Dans le cas d'une utilisation entre la caisse et le boggie d'une voiture l'amortisseur étant en position horizontale décentré et longitudinalement pour avoir une action sur le boggie en lacet, la caractéristique effort/déplacement d'un amortisseur hydraulique de l'état de la technique est favorable lorsque le boggie est en alignement avec la caisse. En effet, l'amortisseur améliore alors la stabilité globale de la voiture, et par conséquent du train. Cependant, une telle caractéristique effort/déplacement est défavorable en courbe. En effet, l'amortisseur génère un couple important s'opposant à la rotation du boggie sous la caisse. Ceci se traduit par des forces importantes entre les roues du boggie et les rails de la voie. Ces forces s'opposent à un bon roulement.

Dans le cas d'une utilisation entre deux caisses, l'amortisseur étant en position horizontale et décentré longitudinalement, la caractéristique effort/déplacement d'un amortisseur hydraulique de l'état de la technique est favorable lorsque les caisses sont alignées. Dans ce cas, le comportement dynamique du train est amélioré. Cependant, une telle caractéristique effort/déplacement est défavorable dans le cas de passage en. courbe où il y a des déplacements importants entre les deux caisses.

Pour répondre à ce besoin, il a été proposé des amortisseurs hydrauliques commandés, comportant une vanne contrôlée électroniquement par un dispositif de contrôle.

Lorsque le dispositif de contrôle détecte l'entrée dans un passage en courbe, il commande en ouverture la vanne contrôlée, de sorte que la tête du piston de l'amortisseur se déplace librement à l'intérieur de la chambre principale. L'amortisseur ne génère alors plus aucun effort.

Lorsque le dispositif de contrôle détecte la sortie du passage en courbe, il commande en fermeture la vanne contrôlée, de sorte que la tête du piston de l'amortisseur ne se déplace plus librement. L'amortisseur génère alors un effort prédéfini.

Cependant ces amortisseurs commandés sont coûteux, complexes à mettre en oeuvre et difficiles à maintenir en état de fonctionnement. De fait, cette solution n'est pas ou peu utilisée.

L'invention a donc pour but de remédier à ces problèmes.

Pour cela, l'invention a pour objet un amortisseur hydraulique, une voiture pour véhicule ferroviaire et un véhicule ferroviaire définis par les revendications.

L'invention et ses avantages seront mieux compris à la lecture de la description qui va suivre, donnée uniquement à titre d'exemple et faite en se référant aux dessins annexés sur lesquels :
- la figure 1 est une coupe longitudinale d'un amortisseur hydraulique bi-mode ;
- la figure 2 est une vue agrandie de la figure 1, au voisinage de la tête du piston de l'amortisseur ;
- la figure 3 représente schématiquement l'amortisseur de la figure 1 dans une position neutre ;
- la figure 4 représente de manière schématique l'amortisseur de la figure 1 dans une position rétractée ;
- la figure 5 représente de manière schématique l'amortisseur de la figure 1 dans une position étirée ;
- la figure 6 représente la caractéristique effort/déplacement de l'amortisseur de la figure 1 ;
- la figure 7 représente schématiquement l'attelage de deux caisses d'un train par deux amortisseurs hydrauliques bi-modes conformes à la figure 1 ; et,
- la figure 8 est une représentation schématique un boggie relié à une caisse d'une voiture d'un véhicule ferroviaire par deux amortisseurs hydrauliques bi-modes conformes à la figure 1.

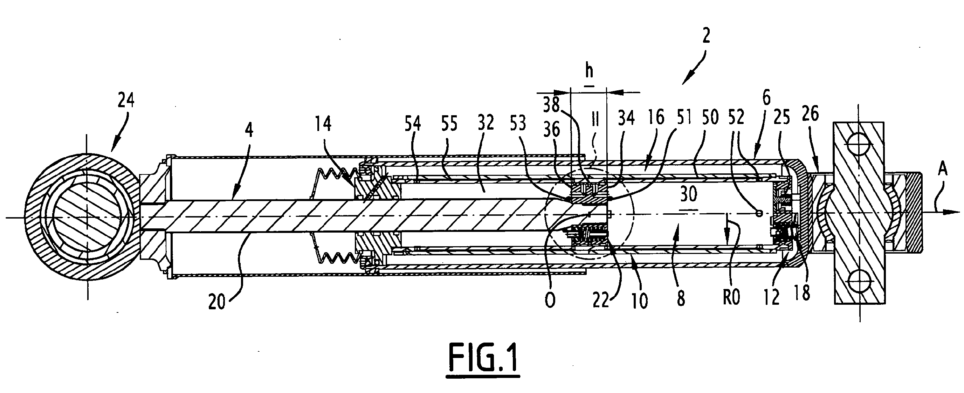

En se référant à la figure 1, l'amortisseur hydraulique bi-mode comporte un piston 4 et un cylindre 6.

Le piston 4 est propre à se déplacer le long d'un axe A du cylindre, arbitrairement orienté de la gauche vers la droite sur la figure 1.

Le cylindre 6 comporte intérieurement une chambre principale 8 délimitée radialement par une paroi latérale 10 de rayon intérieur R0 (aux tolérances près).

La chambre principale 8 est obturée à l'une de ses extrémités, dite basse, par une embase 12.

L'autre extrémité de la chambre principale 8, dite haute, est obturée par une paroi transversale 14 munie d'un trou traversant pour le passage d'une tige du piston 4 comme ceci sera décrit ci-après.

Le cylindre 6 comporte une chambre de compensation 16 annulaire, située autour de la paroi latérale 10 de la chambre principale 8.

L'embase 12 est munie d'un clapet 18 et d'une valve 25 permettant au fluide contenu à l'intérieur du cylindre 6 de circuler entre la chambre principale 8 et la chambre de compensation 16. Le clapet 18 unidirectionnel est taré pour permettre une circulation du fluide lorsque la différence de pression entre la chambre principale 8 et la chambre de compensation 16 est supérieure à une première valeur prédéterminée. La valve 25 unidirectionnelle permet un retour libre de l'huile de la chambre 16, dans la chambre principale 8, lors d'une sortie de piston 4.

Le piston 4 comporte une tige 20 s'étendant selon l'axe A.

L'extrémité de la tige 20 située à l'intérieur de la chambre principale 8 porte une tête 22, tandis que l'autre extrémité de la tige 20, située à l'extérieur de la chambre principale 8, porte des premiers moyens de fixation 24 de l'amortisseur. Le cylindre 6 comporte des seconds moyens de fixation 26 de l'amortisseur.

La tête 22 du piston a la forme d'un disque de rayon RO et de hauteur h.

La tête 22 du piston subdivise la chambre principale 8 en une chambre basse 30, du côté de l'embase 12 de la chambre principale, et une chambre haute 32, du côté opposé de l'embase.

La tête 22 du piston présente une face transversale basse 34, du côté de la chambre basse 30, une face transversale haute 36, du côté de la chambre haute 32 et une face radiale 38 sensiblement cylindrique, d'axe A et de rayon R0.

La tête 22 est munie d'une paire de vannes connectant hydrauliquement les deux faces transversale haute 36 et basse 34 de celle-ci.

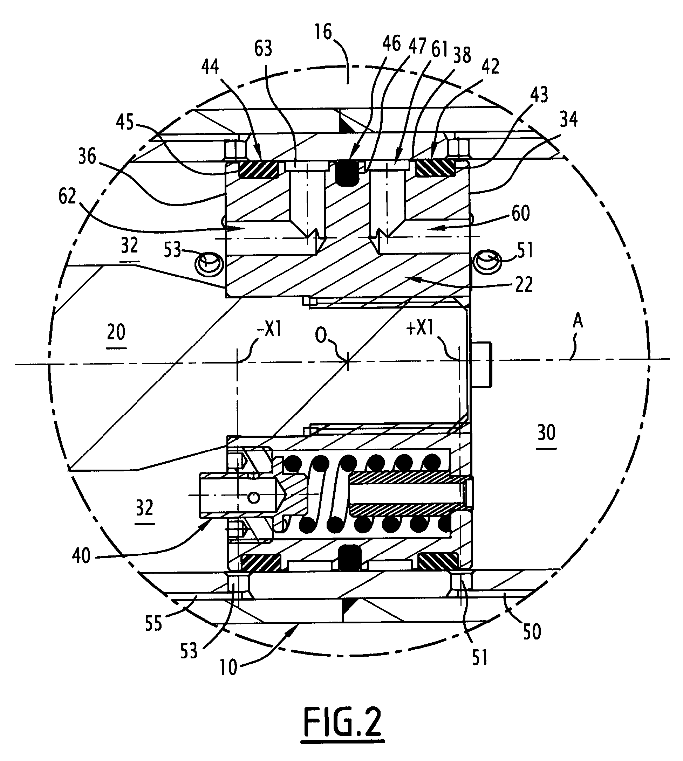

Les vannes étant décalées angulairement autour de l'axe A. Une seule vanne 40 de la paire de vannes est représentée sur la figure 2.

Les vannes sont unidirectionnelles. Une première vanne (non représentée) est montée sur la tête 22 pour permettre (en compression) une circulation du fluide de la chambre basse 30 vers la chambre haute 32 lorsque la différence de pression entre ces chambres est supérieure à une seconde valeur prédéfinie.

Une seconde vanne 40 est montée pour agir réciproquement à la première, c'est-à-dire pour permettre une circulation du fluide de la chambre haute 32 vers la chambre basse 30, lorsque la différence de pression entre ces chambres est supérieure à une troisième valeur prédéfinie.

En variante, la tête comporte plus d'une paire de vannes 40.

Sur sa face latérale 38, la tête 22 porte deux segments de guidage. Le segment bas 42 est logé dans un évidement bas 43, annulaire, prévu sur la face radiale 38 de la tête 22, à proximité de la face transversale basse 34. Le segment haut 44 est logé dans un évidement haut 45, annulaire, prévu sur la face radiale 38 de la tête 22, à proximité de la face transversale haute 36.

Les segments de guidage assurent le guidage de la tête du piston le long de la paroi latérale 10 de la chambre principale 8, tout en reprenant d'éventuels efforts transversaux transmis par la tige 20.

Sur sa face latérale 38, la tête 22 du piston porte également un joint d'étanchéité 46. Il est logé dans une rainure 47 annulaire, située sensiblement au milieu des évidements haut 45 et bas 43.

Le joint 46 a pour fonction de réaliser l'étanchéité entre les chambres basse 30 et haute 32 de la chambre principale 8.

La paroi latérale 10 de la chambre principale 8 est munie de moyens de décharge bas et de moyens de décharge hauts.

Les moyens de décharge haut et bas sont disposés symétriquement par rapport à un plan dit médian du cylindre, qui coupe l'axe A en un point O constituant l'origine des cotes le long de l'axe A.

Plus précisément, les moyens de décharge bas consistent en au moins un premier orifice de décharge bas 51, disposé à la cote +X1 le long de l'axe A ; au moins un second orifice de décharge bas 52 situé à la cote +X2 le long de l'axe A ; et un canal de décharge bas 50 connectant hydrauliquement les premier et second orifices de décharge bas 51 et 52.

En variante, plusieurs orifices de décharge bas 51 sont réalisés, le premier à la cote +X1 et les suivants à la cote +X1 augmentée de quelques millimètres. Avantageusement disposés, ces orifices supplémentaires permettent une continuité de la libre circulation de l'huile entre les chambres basse 30 et haute 32 lorsque le segment haut 44 vient obturer le premier orifice de décharge bas disposé à la cote +X1.

Dans le mode de réalisation représenté ici en détail, le canal de décharge bas est ménagé dans l'épaisseur de la paroi latérale 10 de la chambre principale 8. Avantageusement, la paroi latérale 10 de la chambre principale 8 est un assemblage.

En variante, le canal de décharge est réalisé par une gorge circulant sur la surface intérieure de la paroi latérale de la chambre principale, entre les orifices de décharge qui ne sont alors pas traversants.

Dans encore une autre variante, le canal de décharge est étendu : il constitue une chambre de décharge annulaire s'étendant à la périphérie de la partie basse de la chambre principale, sensiblement entre les côtes +X1 et +X2.

De manière symétrique par rapport à un point O, les moyens de décharge haut consistent en au moins un premier orifice de décharge haut 53 disposé à la cote -X1 le long de l'axe A ; au moins un second orifice de décharge haut 54 situé à la cote -X2 le long de l'axe A ; et un canal de décharge haut 55 connectant hydrauliquement les premier et second orifices de décharge haut 53 et 54.

En variante, plusieurs orifices de décharge haut 53 sont réalisés, le premier à la cote -X1 et les suivants à la cote -X1 augmentée de quelques millimètres. Avantageusement disposés, ces orifices supplémentaires permettent une continuité de la libre circulation de l'huile entre les chambres haute 32 et basse 30 lorsque le segment bas 42 vient obturer le premier orifice de décharge bas disposé à la cote -X1.

Les canaux de décharge haut et bas 50 et 55 ne sont pas connectés hydrauliquement l'un à l'autre.

Comme représenté en détail sur la figure 2, la tête 22 du piston comporte une dérivation basse 60 et une dérivation haute 62.

En variante, plusieurs dérivations hautes 62 et basses 60 sont présentes, décalées angulairement autour de l'axe A.

La dérivation basse 60 est coudée. Elle débouche axialement sur la face transversale basse 34 de la tête 22 et radialement sur la face latérale 38 de celle-ci. Sur la face latérale 38, la dérivation 60 débouche à proximité immédiate de la rainure 47 recevant le joint d'étanchéité 46, entre cette rainure et l'évidement bas 43 recevant le segment bas 42. De préférence, dérivation 60 débouche radialement dans une encoche annulaire 61.

De manière symétrique par rapport au point O, la dérivation haute 62 débouche axialement sur la face transversale haute 36 de la tête 22 et radialement sur la face latérale 38 de celle-ci, à proximité immédiate de la rainure 47, entre cette rainure et l'évidement haut 45 recevant le segment haut 44. De préférence, dérivation 62 débouche radialement dans une encoche annulaire 63.

En variante, les dérivations hautes 62 et basses 60 peuvent être réalisées par un ou plusieurs trous obliques débouchant aux mêmes endroits que les dérivations coudées.

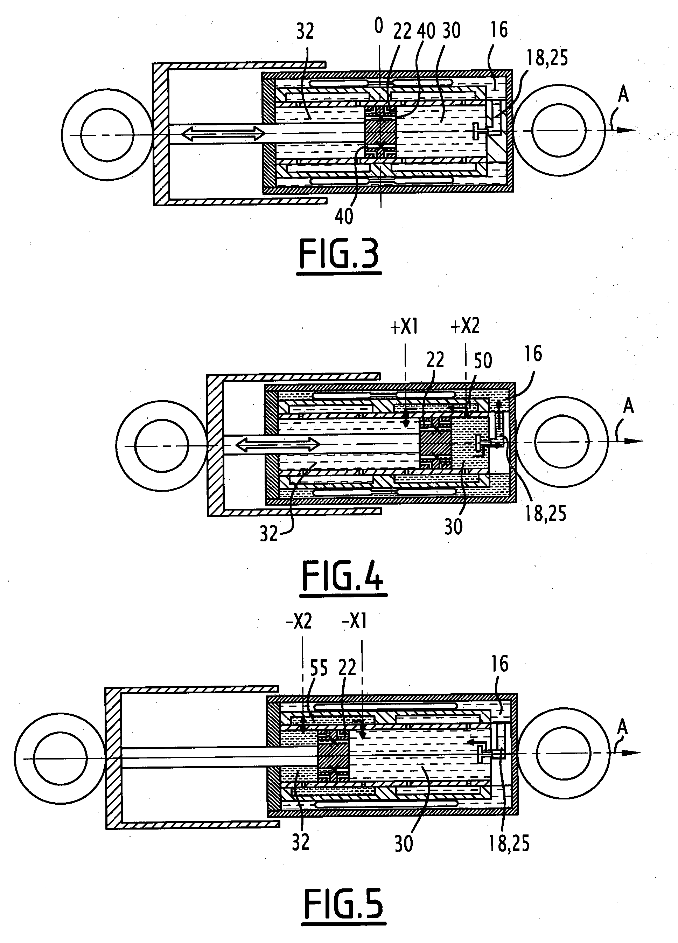

Comme cela est représenté sur la figure 3, lorsque le joint d'étanchéité 46 se situe entre les côtes -X1 et +X1, l'amortisseur 2 est dans un mode normal. Dans ce mode de fonctionnement il est propre à développer un effort résistant s'opposant à une force tendant à comprimer ou à étirer l'amortisseur. L'amplitude de cet effort résistant dépend des caractéristiques des vannes 40 équipant la tête 22 du piston et du clapet 18 de l'embase 12.

Une force tendant à comprimer l'amortisseur, c'est-à-dire à faire rentrer la tige 22 à l'intérieur de la chambre principale 8 du cylindre, conduit à la mise en surpression du fluide contenu dans la chambre basse 30. Celui-ci ne pouvant s'écouler oppose une résistance. Lorsque la surpression dépasse un premier seuil de référence, la première vanne de la tête 22 et le clapet 18 s'ouvrent de manière à autoriser l'écoulement d'une partie du fluide de la chambre basse 30, vers la chambre haute 32 et d'une autre partie du fluide de la chambre basse 30 vers la chambre de compensation 16. La tête 22 du piston peut alors se déplacer vers les côtes positives le long de l'axe A.

De manière similaire, une force tendant à étirer l'amortisseur, c'est-à-dire à faire sortir la tige 22 hors de la chambre principale 8 du cylindre, conduit à la mise en surpression du fluide contenu dans la chambre haute 32. Celui-ci ne pouvant s'écouler oppose une résistance. Lorsque la surpression dépasse un second seuil de référence, la seconde vanne 40 de la tête et la valve 25 de l'embase 12 s'ouvrent de manière à autoriser d'une part l'écoulement du fluide de la chambre haute 32, vers la chambre basse 30 et d'autre part un retour libre d'huile de la chambre de compensation 16 vers la chambre basse 30. La tête 22 du piston peut alors se déplacer vers les côtes négatives le long de l'axe A.

L'homme du métier saura comment dimensionner l'amortisseur (surface des faces transversales de la tête du piston, valeur prédéterminée de tarage des première et seconde vannes de la tête et du clapet de l'embase, section des vannes de la tête et du clapet et de la valve de l'embase, etc.) pour obtenir le comportement recherché.

Comme cela est représenté sur la figure 4, lorsque le joint 46 est situé entre les côtes +X1 et +X2, l'amortisseur fonctionne dans un mode réduit. Dans ce mode de fonctionnement, la tête 22 du piston en se déplaçant à l'intérieur de la chambre principale 8 n'est freinée que par le clapet 18 de l'embase 12 en compression et est libre de se déplacer à l'intérieur de la chambre principale 8 en extension.

En effet, la moindre force tendant à comprimer l'amortisseur conduit à une mise en circulation d'une partie de l'huile de la chambre basse 30 vers la chambre haute 32, à travers le second orifice bas 52, le canal de décharge 50, et le premier orifice bas 51. L'autre partie de l'huile passe de la chambre basse 30 à la chambre de compensation 16 au travers du clapet 18 de l'embase 12.

En extension, la moindre force tendant à étirer l'amortisseur conduit à une mise en circulation de l'huile librement de la chambre haute 32 vers la chambre basse 30, à travers le premier orifice bas 51, le canal de décharge 50, et le second orifice bas 52. Un complément d'huile est apporté librement de la chambre de compensation 16 par l'intermédiaire de la valve 25 de l'embase 12 dans la chambre inférieure 30.

De manière symétrique par rapport au point O, comme représenté sur la figure 5, lorsque le joint 46 est située entre les côtes -X1 et -X2, l'amortisseur fonctionne dans un mode réduit. Dans ce mode de fonctionnement, la tête 22 du piston en se déplaçant à l'intérieur de la chambre principale 8 n'est freinée que par le clapet 18 de l'embase 12 en compression et est libre de se déplacer à l'intérieur de la chambre principale 8 en extension.

En effet, la moindre force tendant à comprimer l'amortisseur conduit à une mise en circulation d'une partie de l'huile de la chambre basse 30 vers la chambre haute 32, à travers le premier orifice haut 53, le canal de décharge haut 55, et le second orifice haut 54. L'autre partie de l'huile passe de la chambre basse 30 vers la chambre de compensation 16 au travers du clapet 18 de l'embase 12.

En extension, la moindre force tendant à étirer l'amortisseur conduit à une mise en circulation de l'huile librement de la chambre haute 32 vers la chambre basse 30, à travers le second orifice haut 54, le canal de décharge haut 55, et le premier orifice haut 53. Un complément d'huile est apporté librement de la chambre de compensation 16 par l'intermédiaire de la valve 25 de l'embase 12 dans la chambre inférieure 30.

Il est à noter que, de manière connue en soi, pour compenser la variation du volume de la portion de la tige 20 logée à l'intérieur de la chambre principale 8, la chambre de compensation 16 accepte ou refoule un volume identique de fluide. Pour cela le clapet 18 de l'embase 12 s'ouvre pour permettre un écoulement de fluide freiné en compression entre la chambre principale 8 et la chambre de compensation 16. En extension, la valve 25 de l'embase 12 permet l'écoulement libre entre la chambre de compensation 16 et la chambre principale 8.

De manière particulièrement avantageuse, les dérivations basse 60 et haute 62 dont est munie la tête 22 permettent à l'amortisseur de passer, que ce soit lors d'une compression ou d'une détente, du mode normal à un mode réduit ou inversement, pour une côte précise. Cette dernière correspond au franchissement par le joint 46 de la tête 22 du piston du premier orifice de décharge, que ce soit l'orifice bas 51 ou l'orifice haut 53.

En effet, dès que le joint 46 a franchi le premier orifice bas 51, le canal de décharge bas 50 est mis en communication hydraulique avec la chambre haute 32 au travers de la dérivation haute 62. De ce fait, le fluide circule de la chambre basse 30 vers la chambre haute 32 et la pression dans ces deux chambres s'équilibre.

Ainsi, toute interférence par le segment haut 44 est évitée. En effet, dans l'art antérieur, pour qu'il y ait équilibrage de la pression entre les chambres basse et haute, il faut attendre non seulement que le joint franchisse le premier orifice bas mais également que le segment haut ait franchi ce premier orifice bas. Ceci est dû au fait que le segment haut modifie la pression du fluide le long de la face radiale de la tête du piston, c'est-à-dire qu'il introduit une différence de pression entre la face du joint orientée vers la chambre haute et la chambre haute. De ce fait, dans l'art antérieur, après que le joint a franchi le premier orifice bas, mais avant que le segment haut ne l'ait également franchi, l'amortisseur génère un effort résistant résiduel. Ainsi, dans l'art antérieur, le franchissement d'un orifice de décharge par la tête du piston ne permet par une modification instantanée de l'effort généré par l'amortisseur entre une première valeur et une seconde valeur. Au contraire, avec les moyens décrits ci-dessus, le présent amortisseur bascule du mode normal vers un mode réduit et inversement immédiatement à la côte +/-X1. Il se comporte comme un interrupteur.

Une description similaire pourrait être faite lorsque le joint 46 franchit le premier orifice haut 53.

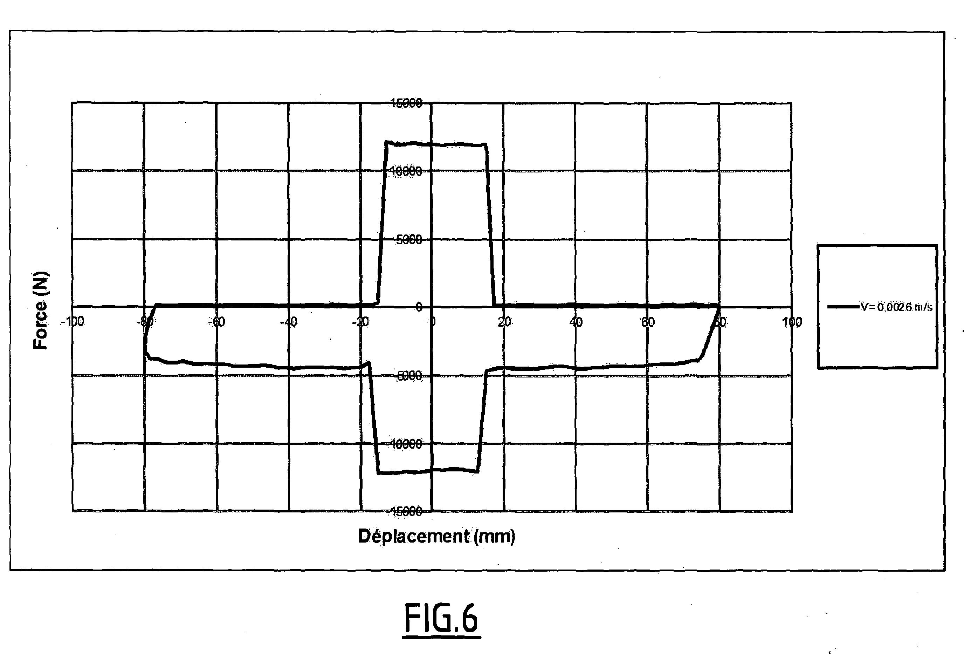

Cette propriété caractéristique du présent amortisseur est illustrée sur le graphe de la figure 6 où la caractéristique force / déplacement de l'amortisseur s'effondre quasiment instantanément pour les côtes +X1 et -X1.

On notera que, en mode réduit et lorsque l'amortisseur est en train d'être compressé, la caractéristique effort/déplacement de l'amortisseur n'est pas nulle. Un effort résiduel est généré par l'amortisseur qui correspond à la sollicitation qui doit exister entre les chambres basse 30 et de compensation 16 pour que le clapet 18 s'ouvre.

Ce comportement asymétrique de l'amortisseur est nivelé en utilisant une paire d'amortisseurs dans laquelle, lorsque le premier amortisseur est comprimé, le second est étiré, et inversement.

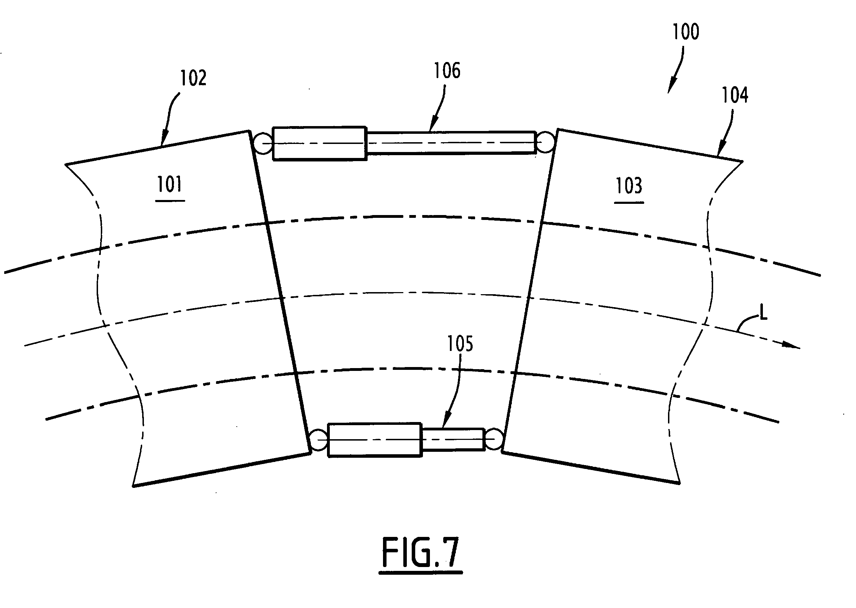

La figure 7 représente schématiquement un attelage de deux voitures d'un train 100. Une première caisse 102 de la première voiture 101 est connectée mécaniquement à une seconde caisse 104 de la seconde voiture 103, par une paire d'amortisseurs hydrauliques bi-mode 105 et 106 identiques à celui décrit ci-dessus.

Les amortisseurs 105 et 106 sont montés dans le même sens. Le moyen de fixation 24 du piston de chaque amortisseur est connecté à la première caisse 102, tandis que le moyen de fixation 26 du cylindre de chaque amortisseur est connecté à la seconde caisse 104.

Les amortisseurs sont disposés parallèlement à un axe longitudinal L de déplacement du train et de part et d'autre de cet axe (décentrés latéralement). De la sorte, lors de passage du train en courbe, l'amortisseur 105 situé à droite de l'axe du train fonctionne en compression au moment où l'amortisseur 106, situé à gauche fonctionne en traction et, inversement, l'amortisseur 105 fonctionne en traction au moment où l'amortisseur 106 fonctionne en compression.

Lorsque les caisses 101 et 103 sont alignées, la distance entre elles est telle que les amortisseurs 105 et 106 fonctionnent en mode normal. Ils génèrent un effort résistant adapté propre à stabiliser le train.

Dans un passage en courbe, par exemple à droite comme sur la figure 7, dès que la course du piston de l'amortisseur 105 dépasse la cote -X1, l'amortisseur 105 bascule en mode réduit. Simultanément, dès que la course du piston de l'amortisseur 106 dépasse la cote +X1, l'amortisseur 106 bascule en mode réduit. Les cotes des premiers orifices de décharge bas 51 et haut 53 sont choisies égales en valeur absolue pour obtenir un tel changement simultané du mode de fonctionnement des deux amortisseurs.

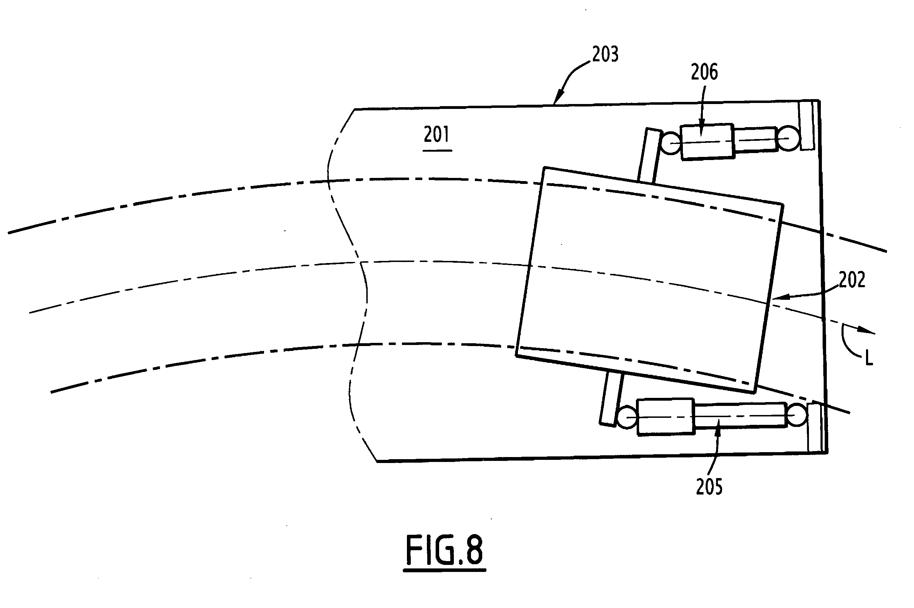

La figure 8 est une représentation schématique d'une voiture 201 dont le boggie 202 est relié mécaniquement à la caisse 203 par deux amortisseurs hydrauliques bi-mode 205 et 206 identiques à celui décrit ci-dessus.

Les amortisseurs sont montés dans le même sens. Le moyen de fixation 24 du piston de chaque amortisseur est connecté par exemple au boggie 202, tandis que le moyen de fixation 26 du cylindre de chaque amortisseur est connecté à la caisse 203.

En variante, le moyen de fixation 24 du piston de chaque amortisseur est connecté à la caisse 203, tandis que le moyen de fixation 26 du cylindre de chaque amortisseur est connecté au boggie 202.

Les amortisseurs 205 et 206 sont disposés parallèlement à un axe longitudinal L de déplacement de la voiture 201 et de part et d'autre de cet axe. De la sorte, l'amortisseur 205 situé à droite de l'axe L fonctionne en traction au moment où l'amortisseur 206 situé à gauche fonctionne en compression et, inversement, l'amortisseur 205 fonctionne en compression au moment où l'amortisseur 206 fonctionne en étirement.

Lorsque le boggie 202 et la caisse 203 sont alignés, les deux amortisseurs 205 et 206 fonctionnent en mode normal. Ils génèrent un effort adapté propre à stabiliser le boggie 202.

Dans un passage en courbe, par exemple à droite comme sur la figure 8, dès que la course du piston de l'amortisseur 205 dépasse la cote +X1, il bascule en mode réduit. Simultanément, dès que la course du piston de l'amortisseur 206 dépasse la cote -X1, il bascule en mode réduit.

En variante, l'homme du métier saura comment modifier l'amortisseur et les cotes des orifices de décharge pour adapter l'amortisseur à l'utilisation qu'il compte en faire.

En particulier, dans le mode de réalisation présenté ici en détail, les orifices de décharge ne sont pas calibrés de sorte qu'ils n'offrent aucune résistance à l'écoulement du fluide. L'effort résistant de l'amortisseur en mode réduit est nul. Cependant, les orifices de décharge pourraient être calibrés pour adapter le niveau de l'effort résistant en mode réduit.

Dans une autre variante, les orifices de décharge sont calibrés de manière à génèrer un effort qui dépend de la vitesse de déplacement de la tête du piston par rapport au cylindre. Le comportement dynamique de l'amortisseur est ainsi réglable, en fonction de la résistance à l'écoulement qu'offre chaque orifice de décharge.

Dans encore une autre variante, l'amortisseur comporte plus de deux ensembles de moyens de décharge.

Dans encore une autre variante, indépendante de la précédente, les moyens de décharge comportent, entre des orifices d'extrémité, un ou plusieurs orifices intermédiaires, de manière à présenter, en mode réduit, un effort non nulle, variant en fonction de la position de la tête du piston par rapport aux orifices intermédiaires.

## Revendications

1. Amortisseur hydraulique (2) du type comportant un piston (4) ayant une tige (20) et une tête (22), propre à coulisser dans un cylindre (6), ledit cylindre comportant une chambre principale (8) subdivisée par la tête (22) en une chambre basse (30) et une chambre haute (32), et des moyens de décharge connectant hydrauliquement les chambres basse et haute pour une plage de positions de la tête du piston à l'intérieur de la chambre principale, lesdits moyens de décharge étant des moyens de décharge bas (51, 50, 52) connectant les chambres basse et haute sur une première plage ([+X1 ; +X2]) de positions de la tête (22), l'amortisseur comporte, en outre, des moyens de décharge hauts (53, 55, 54) connectant les chambres basse et haute pour une seconde plage ([-X1 ; -X2]) de positions de la tête (22), de sorte que l'amortisseur présente, d'une part, entre les première et seconde plages une résistance élevée et, d'autre part, sur la première plage et sur la seconde plage une résistance réduite,
**caractérisé en ce que** la tête (22) du piston (4) porte, sur une face radiale (38), un joint d'étanchéité (46), et comporte une dérivation haute (62) permettant d'appliquer la pression de la chambre haute (32) immédiatement sur le joint et une dérivation basse (60) permettant d'appliquer la pression de la chambre basse (30) immédiatement sur le joint.

2. Amortisseur selon la revendication 1, dans lequel les moyens de décharge hauts et bas comportent respectivement un canal de décharge (50, 55) connectant hydrauliquement un premier orifice (51, 53) et un second orifice (52, 54) prévus sur une paroi latérale (10) délimitant la chambre principale (8) du cylindre.

3. Amortisseur selon la revendication 2, dans lequel le premier orifice (51) des moyens de décharge bas est situé à une première cote (+X1 ) positive le long de l'axe longitudinale de l'amortisseur, et le premier orifice (53) des moyens de décharge haut est situé à une première cote (-X1) négative, l'axe longitudinal de l'amortisseur étant orienté selon la direction de déplacement de la tête du piston lors d'une compression de l'amortisseur.

4. Amortisseur selon la revendication 3, dans lequel la première cote positive et la première cote négative sont équidistantes d'un point origine (O) du déplacement de la tête (22) du piston par rapport au cylindre.

5. Amortisseur selon l'une quelconque des revendications 2 à 4, dans lequel le canal de décharge (50, 55) des moyens de décharge, respectivement bas et hauts, est ménagé dans l'épaisseur de la paroi radiale (10) délimitant la chambre principale (8).

6. Amortisseur selon la revendication 5, dans lequel le canal de décharge est une chambre annulaire entourant une partie de la chambre principale (8).

7. Amortisseur selon l'une quelconque des revendications 1 à 6, dans lequel la dérivation haute (62) est coudée de manière à déboucher d'une part sur une face transversale haute (36) de la tête (22) et d'autre part sur la face radiale (38) de la tête (22) au voisinage du joint (46), et dans lequel la dérivation basse (60) est coudée de manière à déboucher d'une part sur une face transversale basse (34) de la tête (22) et d'autre part sur la face radiale (38) de la tête du piston au voisinage du joint (46).

8. Amortisseur selon l'une quelconque des revendications 1 à 7, dans lequel la tête du piston porte un segment de guidage haut (44) au voisinage de la face transversale haute (36) de la tête, la dérivation haute (62) débouchant sur la face radiale (38) de la tête du piston entre le segment haut et le joint (46), et dans lequel la tête du piston porte un segment de guidage bas (42) au voisinage de la face transversale basse (34) de la tête, la dérivation basse (60) débouchant sur la face radiale (38) de la tête du piston entre le segment bas et le joint (46).

9. Amortisseur selon l'une quelconque des revendications 1 à 8, dans lequel le cylindre (6) comporte un moyen de compensation (16) de la variation du volume de la portion de la tige (20) du piston (4) se situant à l'intérieur de la chambre principale (8).

10. Voiture (201) pour véhicule ferroviaire comportant une caisse (203) et un boggie (202), **caractérisée en ce que** la caisse et le boggie sont connectés l'un à l'autre par au moins un amortisseur hydraulique (205, 206) conforme à l'une quelconque des revendications 1 à 9.

11. Véhicule ferroviaire (100) comportant au moins une première voiture (101) et une seconde voiture (103), **caractérisé en ce qu'**une première caisse (102) de la première voiture est connectée à une seconde caisse (104) de la seconde voiture par au moins un amortisseur hydraulique (105, 106) conforme à l'une quelconque des revendications 1 à 9.

## Patentansprüche

1. Hydraulischer Dämpfer (2) des Typs, der einen eine Stange (20) und eine Kopf (22) aufweisenden Kolben (4) umfasst, der geeignet ist, in einem Zylinder (6) zu gleiten, wobei der Zylinder eine Hauptkammer (8), die von dem Kopf (22) in eine untere Kammer (30) und eine obere Kammer (32) unterteilt ist, und Mittel zur Entlastung, die hydraulisch die untere Kammer und die obere Kammer für einen Bereich von Positionen des Kopfes des Kolbens im Inneren der Hauptkammer verbinden, wobei die Mittel zur Entlastung untere Mittel (51, 50, 52) zur Entlastung sind, die die untere Kammer und obere Kammer über einen ersten Bereich ([+X1; +X2]) von Positionen des Kopfes (22) verbinden, wobei der Dämpfer außerdem obere Mittel (53, 55, 54) zur Entlastung aufweist, die die untere Kammer und obere Kammer für einen zweiten Bereich ([-X1; -X2]) von Positionen des Kopfes (22) derart verbindet, dass der Dämpfer einerseits zwischen dem ersten und zweiten Bereich einen erhöhten Widerstand und andererseits über den ersten Bereich und den zweiten Bereich einen verringerten Widerstand aufweist, **dadurch gekennzeichnet, dass** der Kopf (22) des Kolbens (4) an einer radialen Fläche (38) eine Dichtung (46) trägt und eine obere Abzweigung (62), die ermöglicht, den Druck der oberen Kammer (32) unmittelbar auf die Dichtung aufzubringen, und eine unter Abzweigung (60), die ermöglicht, den Druck der unteren Kammer (30) unmittelbar auf die Dichtung aufzubringen, aufweist.

2. Dämpfer nach Anspruch 1, bei dem die oberen und unteren Mittel zur Entlastung jeweils einen Entlastungskanal (50, 55) aufweisen, die hydraulisch eine erste Öffnung (51, 53) und eine zweite Öffnung (52, 54) verbinden, die auf einer die Hauptkammer (8) des Zylinders begrenzenden Seitenwand (10) vorgesehen sind.

3. Dämpfer nach Anspruch 2, bei dem die erste Öffnung (51) der unteren Mittel zur Entlastung an einem ersten positiven Maß (+X1) entlang der Längsachse des Dämpfers liegt und die erste Öffnung (53) der oberen Mittel zur Entlastung an einem ersten negativen Maß (-X1) liegt, wobei die Längsachse des Dämpfers gemäß der Richtung der Verschiebung des Kopfes des Kolbens bei einer Kompression des Dämpfers ausgerichtet ist.

4. Dämpfer nach Anspruch 3, bei dem das erste positive Maß und das erste negative Maß gleichabständig zu einem Ursprungspunkt (O) der Verschiebung des Kopfes (22) des Kolbens in Bezug auf den Zylinder sind.

5. Dämpfer nach einem beliebigen der Ansprüche 2 bis 4, bei dem der Entlastungskanal (50, 55) jeweils der oberen und unteren Mittel zur Entlastung in die Dicke der die Hauptkammer (8) begrenzenden radialen Wand (10) eingearbeitet ist.

6. Dämpfer nach Anspruch 5, bei dem der Entlastungskanal eine ringförmige Kammer ist, die teilweise die Hauptkammer (8) umgibt.

7. Dämpfer nach einem beliebigen der Ansprüche 1 bis 6, bei dem die obere Abzweigung (62) derart abgewinkelt ist, dass sie einerseits an einer oberen Querfläche (36) des Kopfes (22) und andererseits an der radialen Fläche (38) des Kopfes (22) in der Nähe der Dichtung (46) mündet und bei dem die untere Abzweigung (60) derart abgewinkelt ist, dass sie einerseits an der unteren Querfläche (34) des Kopfes (22) und andererseits an der radialen Fläche (38) des Kopfes des Kolbens in der Nähe der Dichtung (46) mündet.

8. Dämpfer nach einem beliebigen der Ansprüche 1 bis 7, bei dem der Kopf des Kolbens ein oberes Führungssegment (44) in der Nähe der oberen Querfläche (36) des Kopfes trägt, wobei die obere Abzweigung (62) an der radialen Fläche (38) des Kopfes des Kolbens zwischen dem oberen Segment und der Dichtung (46) mündet, und bei dem der Kopf des Kolbens ein unteres Führungssegment (42) in der Nähe der unteren Querfläche (34) des Kopfes trägt, wobei die untere Abzweigung (60) an der radialen Fläche (38) des Kopfes des Kolbens zwischen dem unteren Segment und der Dichtung (46) mündet.

9. Dämpfer nach einem beliebigen der Ansprüche 1 bis 8, bei dem der Zylinder (6) ein Mittel (16) zur Kompensation der Veränderung des Volumens des Teils der Stange (20) des Kolbens (4) aufweist, der im Inneren der Hauptkammer (8) liegt.

10. Wagen (201) für ein Schienenfahrzeug, einen Wagenkasten (203) und ein Fahrgestellt (202) umfassend, **dadurch gekennzeichnet, dass** der Wagenkasten und das Fahrgestell miteinander mittels mindestens eines hydraulischen Dämpfers (205, 206) entsprechend einem beliebigen der Ansprüche 1 bis 9 verbunden sind.

11. Schienenfahrzeug (100), mindestens einen ersten Wagen (101) und einen zweiten Wagen (103) umfassend, **dadurch gekennzeichnet, dass** ein erster Wagenkasten (102) des ersten Wagens mit einem zweiten Wagenkasten (104) des zweiten Wagens über mindestens einen hydraulischen Dämpfer (105, 106) entsprechend einem beliebigen der Ansprüche 1 bis 9 verbunden ist.

## Claims

1. Hydraulic damper (2) of a kind comprising a piston (4) which has a rod (20) and a head (22) and which is arranged to slide in a cylinder (6), said cylinder comprising a main chamber (8) subdivided by the head (22) into a lower chamber (30) and an upper chamber (32), and relief means hydraulically connecting the lower and upper chambers for a range of positions of the head of the piston inside the main chamber, said relief means being lower relief means (51, 50, 52) connecting the lower and upper chambers over a first range ([+X1; +X2]) of positions of the head (22), the damper additionally comprising upper relief means (53, 55, 54) connecting the lower and upper chambers for a second range ([-X1; -X2]) of positions of the head (22), so that the damper has, on the one hand, an elevated resistance between the first and second ranges and, on the other hand, a reduced resistance over the first range and over the second range,
**characterised in that** the head (22) of the piston (4) bears, on a radial face (38), a seal (46) and has an upper bypass (62) allowing the pressure of the upper chamber (32) to be applied immediately onto the seal and a lower bypass (60) allowing the pressure of the lower chamber (30) to be applied immediately onto the seal.

2. Damper according to claim 1, wherein the upper and lower relief means comprise in each respective case a relief channel (50, 55) hydraulically connecting a first orifice (51, 53) and a second orifice (52, 54) which are provided on a lateral wall (10) delimiting the main chamber (8) of the cylinder.

3. Damper according to claim 2, wherein the first orifice (52) of the lower relief means is located at a first positive distance point (+X1) along the longitudinal axis of the damper, and the first orifice (53) of the upper relief means is located at a first negative distance point (-X1), the longitudinal axis of the damper being oriented in the direction of displacement of the piston head during compression of the damper.

4. Damper according to claim 3, wherein the first positive distance point and the first negative distance point are equidistant from a point of origin (O) of the displacement of the piston head (22) with respect to the cylinder.

5. Damper according to any one of claims 2 to 4, wherein the relief channel (50, 55, respectively) of the lower and upper relief means is provided within the thickness of the radial wall (10) delimiting the main chamber (8).

6. Damper according to claim 5, wherein the relief channel is an annular chamber surrounding a portion of the main chamber (8).

7. Damper according to any one of claims 1 to 6, wherein the upper bypass (62) has an elbow bend so as to open out, on the one hand, on an upper transverse face (36) of the head (22) and, on the other hand, on the radial face (38) of the head (22) close to the seal (46), and wherein the lower bypass (60) has an elbow bend so as to open out, on the one hand, on a lower transverse face (34) of the head (22) and, on the other hand, on the radial face (38) of the head of the piston close to the seal (46).

8. Damper according to any one of claims 1 to 7, wherein the piston head bears an upper guiding segment ring (44) close to the upper transverse face (36) of the head, the upper bypass (62) opening out on the radial face (38) of the piston head between the upper segment ring and the seal (46), and wherein the piston head bears a lower guiding segment ring (42) close to the lower transverse face (34) of the head, the lower bypass (60) opening out on the radial face (38) of the piston head between the lower segment ring and the seal (46).

9. Damper according to any one of claims 1 to 8, wherein the cylinder (6) has a means (16) for compensating for the variation in the volume of that portion of the stem (20) of the piston (4) which is located inside the main chamber (8).

10. Car (201) for a rail vehicle having a body (203) and a bogie (202), **characterised in that** the body and the bogie are connected to one another by at least one hydraulic damper (205, 206) according to any one of claims 1 to 9.

11. Rail vehicle (100) having at least a first car (101) and a second car (103), **characterised in that** a first body (102), of the first car, is connected to a second body (104), of the second car, by at least one hydraulic damper (105, 106) according to any one of claims 1 to 9.
